(19) Europäisches Patentamt / European Patent Office / Office européen des brevets

(11) **EP 3 399 328 B1**

(12) **FASCICULE DE BREVET EUROPEEN**

(45) Date de publication et mention
de la délivrance du brevet:
**22.01.2020 Bulletin 2020/04**

(51) Int Cl.:
**G01S 5/12** *(2006.01)*     *G01S 3/74* *(2006.01)*
**G01S 3/46** *(2006.01)*

(21) Numéro de dépôt: **18170421.4**

(22) Date de dépôt: **02.05.2018**

(54) **PROCÉDÉ ET SYSTÈME DE LOCALISATION DISTRIBUÉ PHDOA, PWDOA, DE SOURCES ÉMETTRICES**

VERTEILTES VERFAHREN UND SYSTEM ZUM LOKALISIEREN VON PHDOA, PWDOA UND ANDEREN SENDEQUELLEN

METHOD AND SYSTEM FOR PHDOA, PWDOA DISTRIBUTED LOCATION OF EMITTING SOURCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2017 FR 1700482**

(43) Date de publication de la demande:
**07.11.2018 Bulletin 2018/45**

(73) Titulaire: **THALES**
**92400 Courbevoie (FR)**

(72) Inventeurs:
• **LEBOURG, Thierry**
**49309 CHOLET (FR)**
• **DEPIERRE, David**
**49309 CHOLET (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-00/69198**     **WO-A1-98/47019**
**US-A1- 2015 268 326**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 399 328 B1

**Description**

L'invention concerne un procédé et un système pour détecter une ou plusieurs émissions électromagnétiques émises dans une zone donnée en utilisant une architecture distribuée de capteurs comportant au moins deux antennes.

Dans la suite, on appellera « capteur » tout système capable de numériser un signal électromagnétique, doté d'un processeur permettant de traiter le signal numérisé, et d'un système d'émission numérique. Un capteur peut, par exemple, être un poste radio logiciel. L'invention est notamment utilisée dans le domaine de la radio surveillance.

La localisation de sources électromagnétiques est un problème important dans le domaine de la surveillance d'émissions autorisées ou non dans un espace donné.

Pour détecter des émissions électromagnétiques, il est connu dans l'art antérieur d'utiliser le principe de détection aveugle qui peut être réalisé via plusieurs techniques.

Ainsi, il est possible pour localiser une ou plusieurs sources émettrices d'estimer la différence de temps d'arrivée ou TDOA (Time Différence of Arrivai), et la localisation hyperbolique selon une méthode décrite dans le brevet US2005/0073459. La technique de localisation mettant en œuvre le TDOA présente toutefois comme principal inconvénient de nécessiter, sur les émissions de radiocommunications, de transmettre le signal numérisé de chaque émission perçue vers l'organe réalisant les intercorrélations entre les signaux des différents capteurs pour estimer la différence de temps d'arrivée, puis la position de l'émetteur. Les performances de localisation sont fonction du produit facteur de bandextemps de signal (i.e., du nombre d'échantillons), ce qui impose pour avoir de bonnes performances d'échanger un nombre important d'échantillons et par conséquent d'avoir un débit de communication des capteurs important. La limitation des débits ne permet pas de localiser systématiquement toutes les émissions.

Une autre technique consiste à estimer l'angle d'arrivée des émissions (AOA ou Angle of Arrivai) et la triangulation MAOA (Multiple Angle Of Arrivai) par capteur défilant ou avec plusieurs capteurs. Un exemple est donné dans la publication de Don J.Torrieri, intitulée « Statistical Theory of Passive Location Systems », IEEE 1984. Les techniques de localisation MAOA mettent en œuvre des réseaux d'antennes non ambigus et disposent de réseaux antennaires complexes à plus de deux antennes. Ces réseaux peuvent s'avérer difficiles à intégrer sur un porteur, particulièrement pour les fréquences basses qui imposent des réseaux de taille importante compte-tenu des longueurs d'onde et de la précision angulaire requis.

Les techniques de localisation MAOA mettant en œuvre la goniométrie PhDOA (Phase Différence Of Arrivai) permettent de lever les ambigüités de localisation en exploitant les mesures réalisées par le capteur durant la trajectoire du porteur.

Cette technique de localisation multivoie entraîne des estimations de directions d'arrivée ambigües, dont les ambigüités ne peuvent être résolues si le capteur est fixe ou si les durées des émissions observées sont trop courtes au regard du temps nécessaire au déplacement du capteur pour lever les ambigüités.

Le brevet US8248210 décrit l'utilisation de deux antennes et le calcul de la phase différentielle pour estimer des angles d'arrivée, avec ambigüités, de plusieurs étiquettes d'identification RFID (Radio Frequency Identification) afin de les distinguer spatialement. La distinction spatiale de ces étiquettes se fait par le calcul des différences de phases liées à chacune des étiquettes RFID (technique SD-PDOA pour Space Division - Phase Différence of Arrivai).

Le brevet USH2224H1 utilise le calcul de la phase différentielle PhDOA ou « Phase Différence Of Arrivai » du TDOA et de la fréquence différentielle FDOA (Frequency Différence of Arrivai) entre deux récepteurs monovoies pour localiser l'émetteur.

Une autre manière consiste à estimer la puissance d'arrivée différentielle ou PwDOA ou en anglo-saxon « Power Différence Of Arrivai ». Cette technique de localisation présente toutefois l'inconvénient d'avoir des performances de localisation liées aux modèles de propagation. Le canal de propagation ne pouvant être estimé dans un système de localisation aveugle, les performances de localisation sont incertaines et souvent inacceptables particulièrement en milieu urbain ou en milieu humide.

Par exemple, le brevet US9316719 utilise une technique PwDOA pour estimer la position d'un émetteur à l'aide d'un capteur mobile et des mesures de la différence de puissance d'arrivée.

La demande de brevet WO98/47019 présente un système de localisation dans lequel le réseau cellulaire avec lequel les émetteurs communiquent va localiser ces derniers.

Les différentes techniques de l'art antérieur ne permettent pas de résoudre notamment et simultanément les problèmes suivants :

- Les durées d'émission des émetteurs à localiser courtes (TDOA, PhDOA avec MAOA par défilement et AOA non ambigüe, MAOA par défilement),
- Une localisation systématique de l'ensemble des communications interceptées par des capteurs à réception instantanée large-bande (TDOA),
- Les réseaux d'antennes de radiométrie complexe et difficile à intégrer (AOA),
- Les émetteurs à localiser de position fixe et les capteurs de position fixe (FDOA),
- Le fonctionnement de la localisation en aveugle avec de bonnes performances (estimation du canal de propagation pour le PwDOA ou commande pour forcer les émetteurs à émettre),

- L'utilisation des mêmes moyens de réception radio logiciel (SDR ou « Software Defined Radio ») pour observer les émissions à localiser et recevoir les informations des autres capteurs concourant à la localisation,
- La séparation des situations d'émissions co-canal (multitrajet ou plusieurs sources dans le même canal) des situations mono-signal (PwDOA, PhDOA et TDOA).

Dans la suite de la description, la lettre Pi désigne une valeur de puissance et $\hat{P}_1$ une valeur estimée.

L'invention concerne un procédé pour localiser au moins une source électromagnétique S au sein d'un réseau de communication comprenant au moins deux capteurs, $R_1$, $R_2$, lesdits capteurs étant séparés par une distance donnée, chaque capteur comprenant un réseau d'antennes comprenant au moins deux antennes de réception $A_1$, $A_2$, caractérisé en ce qu'il comporte au moins les étapes suivantes :

- Pour chaque capteur $R_1$, $R_2$,

  - Estimer les puissances $P_1$ et $P_2$, du signal reçu Sr provenant d'une source S et reçue au niveau des capteurs $R_1$, $R_2$,
  - Pour le signal Sr arrivant sur chacune des deux antennes de réception mesurer la différence de phase $\Delta\varphi$, à partir de la valeur de la différence de phase $\Delta\varphi$ et d'informations sur la position et l'orientation du réseau d'antennes $A_1$, $A_2$, déterminer un ensemble de directions d'arrivée potentielles DOA, pour une source donnée S, puis

- Fusionner les valeurs de puissance $\widehat{P}_1$, $\widehat{P}_2$ reçues au niveau des capteurs $R_1$ et $R_2$, les valeurs de direction potentielles d'arrivée DOA, les coordonnées géographiques des réseaux d'antennes des capteurs $R_1$ et $R_2$, afin de calculer les coordonnées de la source d'émission en exécutant les étapes suivantes :

  - A partir des valeurs de puissance estimées $\hat{P}_1$, $\hat{P}_2$ par les deux capteurs $R_1$, $R_2$, d'un modèle de propagation et de la valeur du rapport de ces puissances $\hat{P}_1 / \hat{P}_2$, définir pour chaque valeur de rapport une zone de localisation élémentaire $Z_e$ dans laquelle la source est présente, puis une zone de localisation potentielle $Z_s$ correspondant à l'intersection des différentes zones de localisation élémentaire pour une source d'émission S,
  - A partir des coordonnées géographiques des capteurs et des directions possibles d'arrivée, calculer les demi-droites de visées possibles et leurs points d'intersection P(Dk),
  - Conserver uniquement les points d'intersection P(Dk) des demi-droites de visées qui appartiennent à la zone de localisation potentielle $Z_s$,
  - Sélectionner les points d'intersection P(Dk), pour lesquels la densité géographique est la plus élevée et déterminer les coordonnées de la source d'émission à partir de ces points d'intersections.

L'étape de fusion des données, valeurs de puissances estimées, directions d'arrivée DOA, coordonnées des réseaux d'antennes est exécutée au niveau du processeur de chaque capteur du réseau de communication.

Selon une autre variante de réalisation, l'étape de fusion des données est exécutée au niveau d'un dispositif de traitement centralisé communiquant avec les capteurs présents dans le réseau de communication.

Le procédé peut comporter une étape d'auto-calibration du réseau d'antennes de chaque capteur en utilisant la position connue des autres capteurs, alors utilisés en mode émission.

Le procédé comporte, par exemple, une étape de segmentation en temps et en fréquence du signal reçu sur les antennes et une étape de détection du nombre de sources présentes en calculant la matrice de covariance du signal sur chaque case temps-fréquence et en comparant les deux valeurs propres de la matrice de covariance au niveau de bruit.

Le modèle de propagation utilisé pour déterminer une zone de localisation élémentaire de la source à partir des valeurs de puissance estimées est un modèle de propagation en « espace libre ».

Les périodes de mesures sur le signal reçu (détection, estimations diverses connues sous le terme anglo-saxon sensing) des capteurs utilisent la méthode d'accès multiple à répartition dans le temps ou TDMA (Time Division Multiple Access) et on utilise un slot spécifique TSLT pour exécuter les étapes du procédé selon l'invention.

L'invention concerne aussi un système de localisation d'au moins une source d'émission dans un réseau de communication comprenant au moins deux capteurs $R_1$, $R_2$ communiquant entre eux au moyen d'une liaison radio, chaque capteur comprenant un réseau d'antennes comprenant au moins deux antennes de réception $A_1$, $A_2$, un capteur comprenant un processeur adapté à traiter les signaux reçus afin de déterminer les valeurs de puissance de signal reçu sur les antennes, les directions d'arrivées potentielles et la valeur de déphasage du signal reçu sur les deux antennes, le système de localisation comprenant un processeur adapté à exécuter les étapes suivantes :

- Fusionner les valeurs de puissances reçues estimées au niveau des capteurs, les valeurs de direction d'arrivée potentielle, les coordonnées du réseau d'antennes, afin de calculer les coordonnées de la source d'émission en exécutant les étapes suivantes :

- A partir des valeurs de puissance estimées $\hat{P}_1$, $\hat{P}_2$ par les deux capteurs $R_1$, $R_2$, d'un modèle de propagation et de la valeur du rapport de ces puissances $\hat{P}_1/\hat{P}_2$, définir pour chaque valeur de rapport une zone de localisation élémentaire $Z_e$ dans laquelle la source est présente, puis une zone de localisation potentielle $Z_s$ correspondant à l'intersection des différentes zones de localisation élémentaire pour une source d'émission S,
- A partir des coordonnées géographiques des capteurs et des directions possibles d'arrivée, calculer les demi-droites de visées possibles et leurs points d'intersection P(Dk),
- Conserver uniquement les points d'intersection P(Dk) des demi-droites de visées qui appartiennent à la zone de localisation potentielle $Z_s$,
- Sélectionner les points d'intersection pour lesquels la densité géographique est la plus élevée, et déterminer les coordonnées de la source d'émission à partir de ces points.

L'invention est appliquée pour un procédé et un système mettant en œuvre des postes radios logiciels.

D'autres caractéristiques et avantages de la présente invention apparaîtront mieux à la lecture de la description d'exemples de réalisation annexée des figures qui représentent :

- Figure 1, un exemple de système selon l'invention,
- Figure 2 et figure 3, un exemple des étapes mises en œuvre par le procédé selon l'invention,
- Figure 4, une représentation de l'arrivée d'un front d'onde sur deux antennes,
- Figure 5 et figure 6, deux représentations de la définition d'une zone possible de localisation,

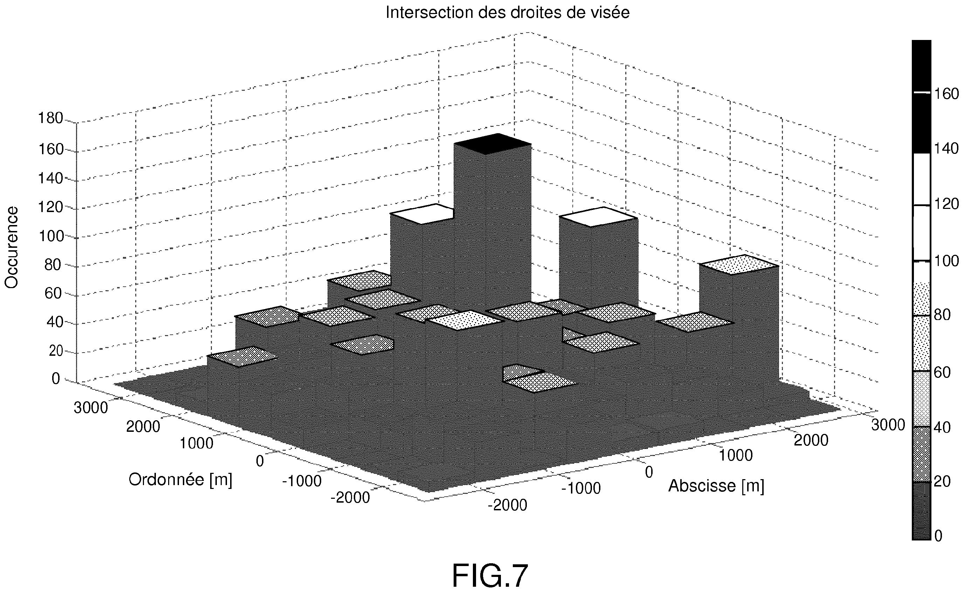

- Figure 7, la représentation histogrammique en 3 dimensions du nombre d'occurrences d'intersections des droites de visées en fonction de leurs abscisses et ordonnées.
- Figure 8, un exemple d'application dans le cas d'une communication utilisant la forme d'onde à accès TDMA.

Afin de bien faire comprendre l'objet de l'invention, un exemple est donné pour un réseau de communication comprenant deux capteurs $R_1$, $R_2$, communiquant grâce à des liens radiofréquences.

Chaque capteur $R_k$, $R_1$, $R_2$, comprend au moins deux antennes $A_1$ et $A_2$, reliées chacune à une voie de réception, comprenant un système d'acquisition. Les deux capteurs sont positionnés l'un par rapport à l'autre avec une distance donnée. Ces deux voies d'acquisition 10, 11 doivent être synchrones. Les échantillons acquis (correspondant notamment au signal émis par la source à localiser) sont envoyés à un module de traitement 12, tel qu'un processeur. Chaque capteur comprend également un système de géolocalisation 14 donnant sa position géographique et son orientation ainsi qu'un module de communication sans fil 15 qui permet aux capteurs $R_k$ présents dans le réseau de communication de s'échanger des données. Les capteurs ne doivent pas être colocalisés, cependant il n'y a pas de distance minimale à respecter.

Sans sortir du cadre de l'invention, le système pourrait comprendre un module de traitement centralisé déporté qui n'est pas un capteur intervenant dans le système de communication.

Dans l'exemple, chaque capteur comporte deux antennes, mais pourrait comprendre un nombre M d'antennes supérieur à deux. Le traitement des données explicité ci-après sera alors effectué, par exemple, en considérant les antennes deux par deux.

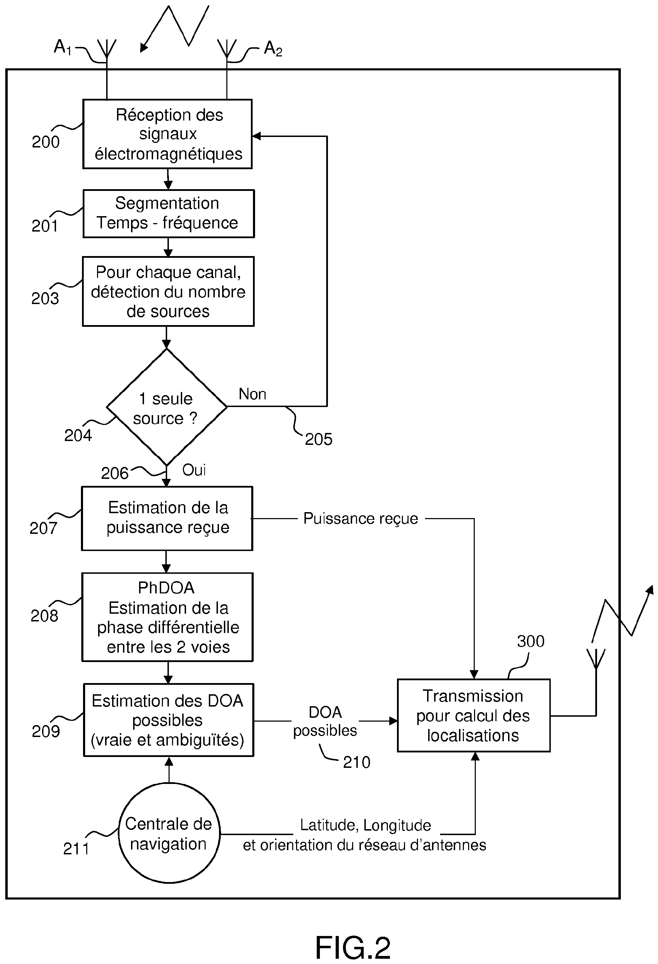

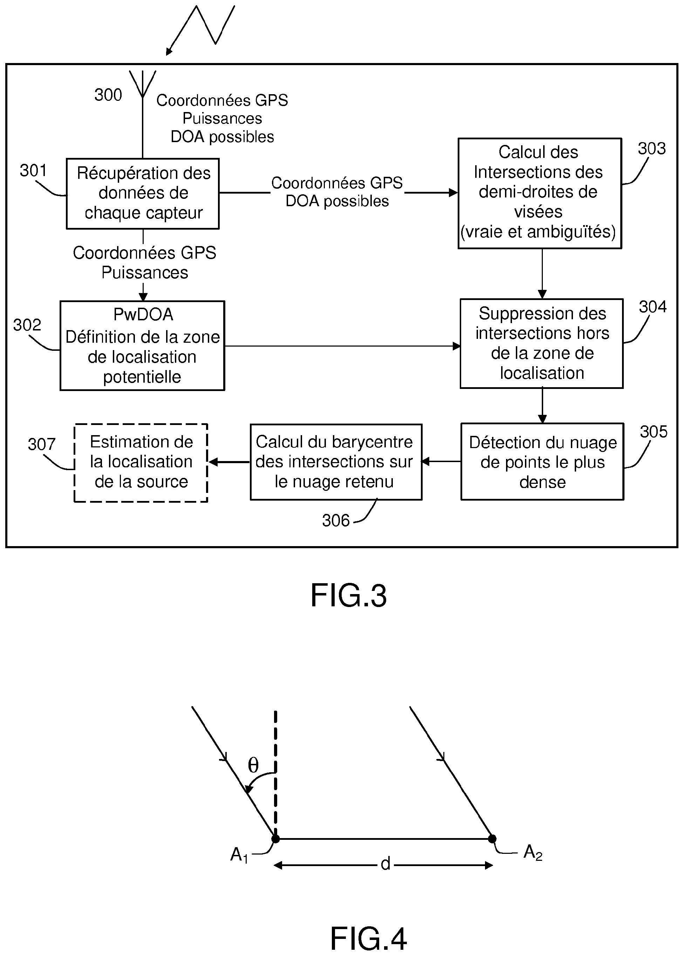

La figure 2 et la figure 3 détaillent les étapes mises en œuvre par l'invention. Les étapes décrites à la figure 2 sont réalisées au niveau de chaque capteur. Dans l'exemple qui va être décrit à la figure 3, les étapes explicitées sont réalisées par chaque capteur, mais pourraient, sans sortir du cadre de l'invention, être exécutées par un dispositif de traitement séparé des N capteurs du système, qui recevra les différentes mesures effectuées par chacun des capteurs.

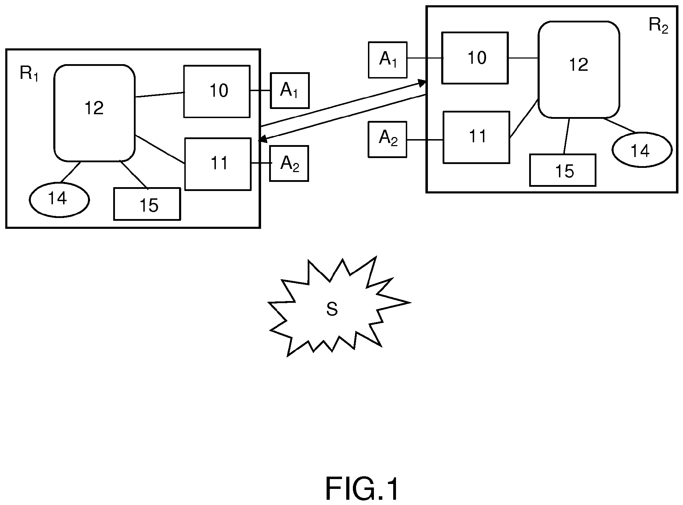

Au niveau de la figure 2, chaque capteur $R_1$, $R_2$ reçoit les signaux de la bande instantanée à écouter et échantillonne la bande sur ses deux voies de réception 10, 11 (figure 1), synchrones, 201. L'étape d'échantillonnage est réalisée par chaque capteur, selon un principe connu de l'homme du métier. Le signal reçu Sr, correspondant aux deux signaux reçus $Sr_1$, $Sr_2$ sur chaque antenne $A_1$, $A_2$, est segmenté en temps et en fréquence par exemple à l'aide d'un banc de filtres polyphasés, 202.

Pour chaque case temps-fréquence, 203, le processeur du capteur effectue un dénombrement du nombre de sources co-canal comprises dans le signal reçu Sr. A partir des deux voies de réception, le processeur va déterminer le nombre de sources éventuellement présentes dans le signal, zéro source, une source ou plus d'une source.

S'il y a zéro source ou plus d'une source, 204, le traitement de la case temps-fréquence s'arrête là, et le procédé continue de traiter les cases temps-fréquence suivantes, 205.

Si une seule source S a été détectée, 206, le processeur du capteur va exécuter les étapes suivantes :

- Il estime la puissance reçue P(S) de la source S, 207,
- Il estime la phase différentielle $\Delta\varphi$ du signal Sr entre les deux voies de réception du capteur (entre les deux antennes) et selon une technique connue sous l'abréviation PhDOA (« Phase Différence Of Arrivai »), 208,
- A partir de la phase différentielle $\Delta\varphi$ estimée à l'étape précédente et des informations sur la position et l'orientation du réseau d'antennes, le processeur estime les directions d'arrivée potentielles (DOA ou « Direction Of Arrival »), 209. Parmi ces directions d'arrivée, il y a la direction d'arrivée DOA correspondant à la source S à localiser et une ou plusieurs ambiguïtés, 210. Le nombre d'ambiguïtés est d'autant plus élevé que la valeur du rapport $d/\lambda$ est élevé, avec d correspond à la distance entre les deux antennes de réception et $\lambda$ correspond à la longueur d'onde du signal traité,

- Le capteur va ensuite transmettre, 300, les données suivantes aux autres capteurs :

  - l'estimation de la puissance qu'il a reçue,
  - les estimations des directions d'arrivée potentielles, DOA,
  - ses coordonnées de localisation (longitude, latitude) et l'orientation de son réseau d'antennes, données qui sont connues par exemple grâce à une centrale de navigation 211,

- Ces données (puissances, directions d'arrivée, coordonnées et orientation du réseau d'antennes) sont fusionnées par le processeur du capteur avec les données calculées au niveau des autres capteurs présents dans le système, dans l'exemple donné, un deuxième capteur et ainsi permettre le calcul des localisations du ou des émetteurs radioélectriques selon les étapes décrites à la figure 3.

La transmission de ces données se fait grâce au module de communication sans fil de chaque capteur.

Dans l'exemple, les étapes de la figure 3 sont exécutées au niveau de chacun des deux capteurs. Sans sortir du cadre de l'invention, ces étapes pourraient être exécutées au niveau d'un dispositif (externe aux capteurs) qui aurait pour fonction de centraliser le traitement des données.

Le capteur $R_1$ récupère les données associées au deuxième capteur $R_2$ (la valeur de la puissance reçue estimée $\hat{P}_2$ et les directions d'arrivée mesurées DOA, 301 qui ont été obtenues en exécutant les étapes décrites pour le capteur $R_2$). Réciproquement, le capteur $R_2$ récupère les données associées au capteur $R_1$.

A partir de la première valeur de puissance $P_1$ estimée $\hat{P}_1$ par le premier capteur $R_1$ et de la deuxième valeur de puissance $P_2$ estimé $\hat{P}_2$ par le deuxième capteur $R_2$, d'un modèle de propagation et de la valeur du rapport de ces deux puissances, $R_1/R_2$, le processeur détermine une zone élémentaire $Z_e$ de localisation puis en déduit une zone de localisation potentielle $Z_s$ de la source d'émission S ($Z_s$ est l'intersection de toutes les zones élémentaires $Z_e$ déterminé en prenant tous les couples de capteurs possibles. Dans le cas, de l'exemple, où il n'y a que deux capteurs $Z_s = Z_e$). Le processeur calcule les intersections de demi-droites de visées, 303, à partir des valeurs de direction d'arrivée possible et de la latitude et longitude du réseau antennaire des capteurs $R_1$ et $R_2$.

L'étape suivante consiste à supprimer les intersections des demi-droites qui ne se trouvent pas dans la zone de localisation $Z_s$, 304, afin de supprimer une partie des points d'intersection $P(Dk)$ correspondant à des droites de visées ambiguës.

Puis, le processeur 12 va déterminer le nuage de points le plus dense, 305 et calculer, par exemple, le barycentre des intersections sur le nuage retenu, 306. Ce barycentre correspond à une estimation de la localisation de la source émettrice, 307.

Ces étapes sont exécutées au niveau de chaque capteur du système de communication, afin que chaque capteur puisse localiser la source émettrice S.

Les étapes qui viennent d'être décrites peuvent, sans sortir du cadre de l'invention, être réalisées au niveau d'un dispositif centralisé (externe aux capteurs) qui reçoit les données précitées de chacun des capteurs, et qui les traite de manière similaire afin de localiser la ou les sources électromagnétiques.

La diffusion des mesures et des résultats de mesure peut être réalisée en multicast afin de distribuer les données à l'ensemble des capteurs présents dans le système et permettre à chacun de réaliser une estimation de la position d'une ou de plusieurs sources électromagnétiques localement.

Dans le cas où les mesures effectuées lors de la première phase de traitement sont transmises à un dispositif de traitement centralisé, c'est ce dernier qui estimera la position de la source ou des sources électromagnétiques présentes dans une zone.

Afin de déterminer si le signal reçu sur un capteur et traité par ce dernier correspond à une source d'émission unique, le processeur de ce capteur calcule, par exemple la matrice de covariance du signal reçue $\mathbf{R_{XX}}$ (matrice 2x2) sur chaque case temps-fréquence obtenue à l'issue de l'étape de segmentation temps-fréquence. Les deux valeurs propres de $\mathbf{R_{XX}}$ sont ensuite calculées et comparées au niveau de bruit pour en déduire si l'on a zéro, une ou plus d'une source. Le niveau de bruit est estimé à l'aide de statistiques sur les valeurs propres de l'ensemble des canaux de la bande instantanée traitée, selon un principe connu de l'homme du métier. Puis, le processeur déduit les valeurs propres de la matrice $\mathbf{R_{XX}}$ en utilisant des méthodes connues de l'homme du métier.

La phase différentielle entre les deux voies ou antennes se déduit directement du vecteur propre associé à la valeur propre correspondant au signal (la valeur propre qui se détache du niveau de bruit).

En prenant les conventions de la figure 4, la différence de phase entre les deux antennes d'un capteur

vaut $\Delta\varphi = \frac{2\pi d}{\lambda} . \sin(\theta).$ On peut alors en déduire les directions d'arrivée possibles ou DOA. En effet, deux signaux provenant de deux directions $\theta_1$ et $\theta_2$ donnent la même différence de phase si

$$\frac{2\pi d}{\lambda} \cdot \sin(\theta_1) = \frac{2\pi d}{\lambda} \cdot \sin(\theta_2) + 2k\pi,$$

avec $k \in \mathbb{Z}$

On a donc toujours l'ambiguïté $\theta_1 = \pi - \theta_2$, correspondant au cas k = 0. A cette ambigüité viennent s'ajouter les

$$\sin(\theta_1) = \sin(\theta_2) + \frac{k\lambda}{d},$$

ambiguïtés dont le nombre dépend de la valeur de d/λ.

Pour définir la zone de localisation potentielle, le procédé pourra exécuter les étapes détaillées ci-après. Pour chaque couple de capteurs, une zone $Z_e$ (que l'on appellera élémentaire) dans laquelle la source émettrice S est présente est estimée. La zone de localisation potentielle $Z_s$ est l'intersection de toutes les zones élémentaires $Z_e$.

Une zone élémentaire $Z_e$ est obtenue à partir de l'estimation de la puissance $P_1$ ($\hat{P}_1$) et $P_2$ ($\hat{P}_2$), de la source émettrice par les deux capteurs. A partir de la valeur du rapport de ces puissances $\hat{P}_1/\hat{P}_2$, on déduit la zone de localisation élémentaire $Z_e$ de la source en prenant comme modèle de propagation, par exemple, un modèle « espace libre » avec une atténuation proportionnelle à l'inverse de la distance au carré. Si ce modèle était exact, la zone élémentaire $Z_e$ serait un cercle. $\varepsilon_p$ est le majorant de l'erreur faite sur l'estimation du rapport de puissance $P_1/P_2$. Cela signifie que :

$$\frac{P_1}{P_2} \in \left[ \frac{\hat{P}_1}{\hat{P}_2} - \varepsilon_p, \frac{\hat{P}_1}{\hat{P}_2} + \varepsilon_p \right]$$

où $\hat{P}_1$ et $\hat{P}_2$ sont respectivement les estimations de $P_1$ et $P_2$.

La valeur de $\varepsilon_p$ est choisie élevée de façon à s'assurer qu'il s'agisse bien d'un majorant de l'erreur, quel que soit le modèle de propagation réel comparé au modèle de propagation choisi.

Le modèle de propagation considéré peut aussi être un modèle de propagation tenant compte d'obstacles et du terrain. Dans tous les cas, le modèle de propagation est connu de l'homme du métier et ne sera pas détaillé.

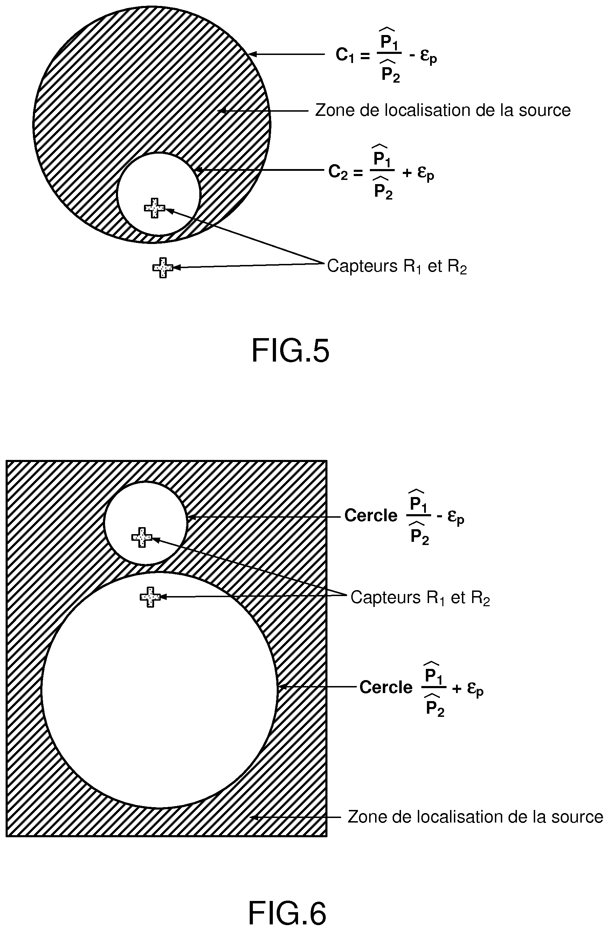

On définit ainsi deux cercles $C_1$, C2, correspondant respectivement à $\frac{\hat{P}_1}{\hat{P}_2} - \varepsilon_p$ et à $\frac{\hat{P}_1}{\hat{P}_2} + \varepsilon_p$. La zone élémentaire $Z_e$ est alors la zone comprise entre ces deux cercles, à l'extérieur du cercle défini par $\frac{\hat{P}_1}{\hat{P}_2} - \varepsilon_p$ et à l'intérieur du cercle défini par $\frac{\hat{P}_1}{\hat{P}_2} + \varepsilon_p$, comme

indiqué figure 5. Dans ce cas, la zone élémentaire $Z_e$ est une zone finie.

En fonction de la position des deux capteurs et de la valeur de $\varepsilon_p$, il existe des cas où la zone élémentaire $Z_e$ est à l'extérieur du cercle défini par $\frac{\hat{P}_1}{\hat{P}_2} - \varepsilon_p$ et à l'extérieur du cercle défini par $\frac{\hat{P}_1}{\hat{P}_2} + \varepsilon_p$, comme indiqué à la figure 6. Dans ce cas, la zone élémentaire est une zone infinie.

L'algorithme PwDOA détermine si la zone élémentaire est à l'intérieur ou à l'extérieur du cercle défini par $\frac{\hat{P}_1}{\hat{P}_2} + \varepsilon_p$. Pour cela, il regarde si les centres $C_{r1}$, $C_{r2}$, des deux cercles $C_1$, $C_2$, sont situés du même côté ou pas des deux capteurs (les centres des cercles sont à droite du capteur le plus à droite ou les deux centres des cercles à gauche du capteur le plus à gauche).

En pratique, pour la détermination de la zone de localisation $Z_s$, la zone géographique dans laquelle évoluent les capteurs est couverte par une grille définie dans un repère abscisse, ordonnée. Pour chaque couple de capteurs $R_1$, $R_2$, les cases de la grille sont incluses dans la zone élémentaire $Z_e$ lorsqu'au moins un de leurs quatre coins est dans la zone élémentaire $Z_e$. La zone de localisation $Z_s$ correspond aux cases qui sont dans toutes les zones élémentaires $Z_e$ (c'est-à-dire dans autant de zones élémentaires qu'il y a de couples de capteurs).

Ce principe peut être étendu, sans sortir du cadre de l'invention, à d'autres modèles de propagation, comme par exemple des modèles de propagation exploitant un modèle numérique de terrain, afin de réduire les incertitudes et par conséquent les zones de localisation potentielle.

Pour le calcul des intersections des demi-droites de visées (vraies et ambigüités) le processeur d'un capteur considère les coordonnées géographiques des capteurs et l'estimation des directions d'arrivée DOA possibles. Les équations des demi-droites de visées (demi-droite commençant sur le capteur et pointant dans la direction de la DOA) sont calculées, puis toutes les intersections de ces demi-droites.

Afin de localiser la ou les sources d'émission, le procédé va détecter le nuage de points le plus dense (zone avec la plus grande concentration de points d'intersection). Afin de détecter la zone où la densité de points est la plus importante, des histogrammes à deux variables (abscisses et ordonnées des points d'intersections) sont calculés selon une méthode connue de l'homme du métier. Les classes de l'histogramme sont donc des parallélépipèdes rectangles dont la hauteur correspond au nombre de points d'intersection compris dans la zone définie par la section du parallélépipède). Le nuage de points retenu correspond aux points dans la classe de l'histogramme la plus élevée et dans les classes voisines (afin de s'affranchir de la problématique du centre des classes). La largeur des classes est adaptative. L'algorithme part avec un pas très fin et augmente itérativement jusqu'à ce que la hauteur des classes soit proche de la hauteur théorique attendue (nombre de fois où N droites se coupent, N étant le nombre de capteurs).

En final, pour estimer la localisation de la source émettrice, le processeur va considérer, par exemple, le barycentre des points du nuage le plus dense.

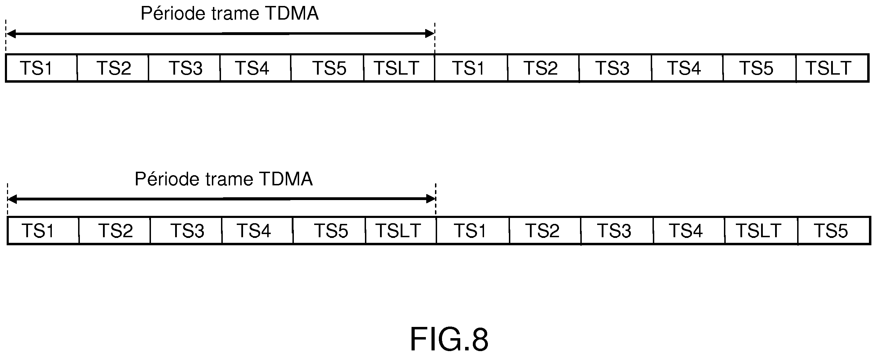

La figure 8 représente deux exemples de mise en œuvre du procédé selon l'invention lorsque les capteurs sont de type poste radio logiciel. La réception des signaux de la bande à surveiller peut être réalisée dans des créneaux temporels ou « time slots TS» TDMA, spécialement alloués TS1 à TS5. Un décalage pseudo-aléatoire du ou des « time slots » permet notamment d'éviter un effet stroboscopique sur l'observation du système de communication ayant la même période trame TDMA que le dispositif de l'invention. D'autres façons de faire peuvent être envisagées comme l'utilisation de la durée entre les paliers des émissions à évasion de fréquence.

La puissance d'arrivée (POA) et la phase différentielle (PhDOA) sont calculées et estimées en détectant les situations d'émission mono-signal via le calcul des valeurs propres de la matrice d'intercorrélation sur les deux voies de chaque capteur. Le vecteur propre associé au signal est ensuite utilisé pour le calcul de la phase différentielle. Ces estimations peuvent être réalisées sur des durées courtes de l'ordre de 160 $\mu$s pour une découpe de la bande instantanée de réception en canaux de 25 kHz. Cette faible durée d'observation TSLT (abréviation anglo-saxonne de Time Slot Look Through) et les données synthétiques qu'elle engendre (PhDOA et PwDOA) permettent d'obtenir une quantité d'information à transmettre en capteur et ainsi de localiser systématiquement toutes les émissions interceptées. Cette faible durée d'observation permet de combiner la fonction « sensing » avec la fonction de radiocommunication nécessaire au service de communication assurant les échanges de données au profit de la fonction « sensing » et des besoins de communications des utilisateurs.

Selon une variante de réalisation, le procédé permet d'effectuer une auto-calibration des deux antennes d'un capteur en utilisant la position connue des autres capteurs présents dans le système de communication qui sont considérés comme des capteurs émetteurs. Le processeur d'un capteur détermine alors la correction de calibration à appliquer lors du traitement des données.

Les étapes qui viennent d'être décrites s'appliquent pour un système dans lequel les capteurs sont des postes radios logiciels.

Le procédé et le système selon l'invention effectuent une localisation distribuée d'une ou plusieurs sources émettrices d'ondes radioélectriques. Ils permettent notamment :

- de s'affranchir des ambigüités d'une goniométrie par phase différentielle deux voies,
- de localiser les émetteurs avec des durées d'observations courtes et des volumes de données réduits à échanger entre capteurs autorisant ainsi une localisation systématique des émissions interceptées et un service « simultanée » du service de « sensing » et du service de radiocommunication.

La mise en œuvre de l'invention ne demande aucune hypothèse de stationnarité de la position des émetteurs et des capteurs. Elle peut s'implémenter sur des postes radios logicielles existant disposant de deux voies synchrones (capacité multiple entrée multiple sortie MIMO ou Multiple Input Multiple Output). Elle permet de faciliter l'intégration sur porteur en exploitant un réseau de deux antennes de réception disposant d'une diversité de réception spatiale (antennes espacées de moins d'une longueur d'onde à plusieurs longueurs d'onde).

**Revendications**

1. Procédé pour localiser au moins une source électromagnétique S au sein d'un réseau de communication comprenant au moins deux capteurs, $R_1$, $R_2$, lesdits capteurs étant séparés d'une distance donnée, chaque capteur comprenant un réseau d'antennes comprenant au moins deux antennes de réception $A_1$, $A_2$, le procédé comporte au moins les étapes suivantes :

   • Pour chaque capteur $R_1$, $R_2$,

      • Estimer les puissances $P_1$ et $P_2$, du signal reçu Sr provenant d'une source S et reçue au niveau des capteurs $R_1$, $R_2$,
      • Pour le signal Sr arrivant sur chacune des deux antennes de réception mesurer la différence de phase $\Delta\varphi$, à partir de la valeur de la différence de phase $\Delta\varphi$ et d'informations sur la position et l'orientation du réseau d'antennes $A_1$, $A_2$, déterminer un ensemble de directions d'arrivée potentielles DOA, pour une source donnée S, puis

   • Fusionner les valeurs estimées de puissance $\hat{P}_1$, $\hat{P}_2$ reçues au niveau des capteurs $R_1$ et $R_2$, les valeurs de direction potentielles d'arrivée DOA, les coordonnées géographiques des réseaux d'antennes des capteurs $R_1$ et $R_2$, afin de calculer les coordonnées de la source d'émission, **caractérisé en ce que** le calcul des coordonnées de la source d'émission comporte les étapes suivantes:

      • A partir des valeurs de puissance estimées $\hat{P}_1$, $\hat{P}_2$ par les deux capteurs $R_1$, $R_2$, d'un

modèle de propagation et de la valeur du rapport de ces puissances $\hat{P}_1$, $\hat{P}_2$, définir pour chaque valeur de rapport une zone de localisation élémentaire $Z_e$ dans laquelle la source est présente, puis une zone de localisation potentielle $Z_s$ correspondant à l'intersection des différentes zones de localisation élémentaire pour une source d'émission S,

• A partir des coordonnées géographiques des capteurs et des directions possibles d'arrivée, calculer les demi-droites de visées possibles et leurs points d'intersection P(Dk),

• Conserver uniquement les points d'intersection P(Dk) des demi-droites de visées qui appartiennent à la zone de localisation potentielle $Z_s$,

• Sélectionner les points d'intersection P(Dk), pour lesquels la densité géographique est la plus élevée, et déterminer les coordonnées de la source d'émission à partir de ces points d'intersections.

**2.** Procédé selon la revendication 1 **caractérisé en ce que** l'étape de fusion des données, valeurs de puissances estimées, direction d'arrivée DOA, coordonnées des antennes, est exécutée au niveau du processeur (12) de chaque capteur du réseau de communication.

**3.** Procédé selon la revendication 1 **caractérisé en ce que** l'étape de fusion des données est exécutée au niveau d'un dispositif de traitement centralisé communiquant avec les capteurs présents dans le réseau de communication.

**4.** Procédé selon la revendication 1 **caractérisé en ce qu'**il comporte une étape d'auto-calibration du réseau d'antennes de chaque capteur en utilisant la position connue des autres capteurs, alors utilisés en mode émission.

**5.** Procédé selon l'une des revendications précédentes **caractérisé en ce qu'**il comporte une étape de segmentation en temps et en fréquence (202) du signal reçu sur les antennes et une étape de détection du nombre de sources présentes (203) en calculant la matrice de covariance du signal sur chaque case temps-fréquence et en comparant les deux valeurs propres de la matrice de covariance au niveau de bruit.

**6.** Procédé selon l'une des revendications précédentes **caractérisé en ce qu'**il utilise comme modèle de propagation pour déterminer une zone de localisation élémentaire de la source à partir des valeurs de puissance estimées un modèle de propagation en « espace libre ».

**7.** Procédé selon l'une des revendications précédentes **caractérisé en ce que** les périodes de mesures sur le signal reçu des capteurs utilisent la méthode d'accès TDMA et **en ce que** l'on utilise un slot spécifique Time Slot Look Through, TSLT, de durée de l'ordre de 160 microseconde pour une découpe d'une bande instantanée de réception en canaux de 25 Kilohertz, pour exécuter les étapes du procédé selon l'invention.

**8.** Système de localisation d'au moins une source d'émission dans un réseau de communication comprenant au moins deux capteurs $R_1$, $R_2$ communiquant entre eux au moyen d'une liaison radio, chaque capteur comprenant un réseau d'antennes comprenant au moins deux antennes de réception $A_1$, $A_2$, un capteur comprenant un processeur (12) adapté au moins à traiter les signaux reçus afin de déterminer les valeurs de puissance de signal reçu sur les antennes, les directions d'arrivée potentielles et la valeur de déphasage du signal reçu sur les deux antennes, le système de localisation comprenant un processeur adapté à exécuter l'étape:

• Fusionner les valeurs de puissance reçues au niveau des capteurs, les valeurs de direction potentielles d'arrivée, les coordonnées du réseau d'antennes, afin de calculer les coordonnées de la source d'émission, **caractérisé en ce que** le calcul des coordonnées de la source d'émission, comporte les étapes suivantes:

• A partir des valeurs de puissance estimées $\hat{P}_1$, $\hat{P}_2$ par les deux capteurs $R_1$, $R_2$, d'un modèle de propagation et de la valeur du rapport de ces puissances $\hat{P}_1$; $\hat{P}_2$, définir pour chaque valeur de rapport une zone de localisation élémentaire $Z_e$ dans laquelle la source est présente, puis une zone de localisation potentielle $Z_s$ correspondant à l'intersection des différentes zones de localisation élémentaire pour une source d'émission S,

• A partir des coordonnées géographiques des capteurs et des directions possibles d'arrivée, calculer les demi-droites de visées possibles et leurs points d'intersection P(Dk),

• Conserver uniquement les points d'intersection P(Dk) des demi-droites de visées qui appartiennent à la zone de localisation potentielle $Z_s$,

• Sélectionner les points d'intersection pour lesquels la densité géographique est la plus élevée, et déterminer les coordonnées de la source d'émission à partir de ces points.

**9.** Système de localisation selon la revendication 8 **caractérisé en ce qu'**un capteur est un poste radio logiciel.

**Patentansprüche**

**1.** Verfahren zum Lokalisieren wenigstens einer elektromagnetischen Quelle S im Innern eines Kommunikationsnetzwerks, das wenigstens zwei Sensoren $R_1$, $R_2$ umfasst, wobei die Sensoren um eine gegebene Distanz voneinander getrennt sind, wobei jeder Sensor ein Antennennetzwerk umfasst, das wenigstens zwei Empfangsantennen $A_1$, $A_2$ umfasst, wobei das Verfahren wenigstens die folgenden Schritte beinhaltet:

• für jeden Sensor $R_1$, $R_2$,

• Schätzen der Leistungen $P_1$ und $P_2$ des empfangenen Signals Sr, das von einer Quelle S kommt und an den Sensoren $R_1$, $R_2$ empfangen wird,
• Messen der Phasendifferenz $\Delta\varphi$ für das an jeder der beiden Empfangsantennen ankommende Signale Sr auf der Basis des Wertes der Phasendifferenz $\Delta\varphi$ und von Informationen über die Position und Orientierung des Antennennetzwerks $A_1$, $A_2$, Bestimmen eines Satzes von potentiellen Ankunftsrichtungen DOA für eine gegebene Quelle S, dann

• Zusammenführen der an den Sensoren $R_1$ und $R_2$ empfangenen geschätzten Leistungswerte $\widehat{P_1}$, $\widehat{P_2}$, der Werte von potentiellen Ankunftsrichtungen DOA, der geografischen Koordinaten der Antennennetzwerke der Sensoren $R_1$ und $R_2$, um die Koordinaten der Sendequelle zu berechnen,
**dadurch gekennzeichnet, dass** das Berechnen der Koordinaten der Sendequelle die folgenden Schritte beinhaltet:

• Definieren, auf der Basis der geschätzten Leistungswerte $\hat{P}_1$, $\widehat{P_2}$ durch die beiden Sensoren $R_1$, $R_2$, eines Ausbreitungsmodells und des Wertes der Beziehung dieser Leistungen $\hat{P}_1$, $\widehat{P_2}$, für jeden Wert der Beziehung einer elementaren Lokalisierungszone $Z_e$, in der sich die Quelle befindet, dann einer potentiellen Lokalisierungszone $Z_s$ entsprechend dem Schnittpunkt der unterschiedlichen elementaren Lokalisierungszonen für eine Sendequelle S,
• Berechnen, auf der Basis der geografischen Koordinaten der Sensoren und der möglichen Ankunftsrichtungen, der möglichen Sichthalbgeraden und ihrer Schnittpunkte P(Dk),
• Konservieren nur der Schnittpunkte P(Dk) der Sichthalbgeraden, die zu der potentiellen Lokalisierungszone $Z_s$ gehören,
• Auswählen der Schnittpunkte P(Dk), für die die geografische Dichte am höchsten ist, und Bestimmen der Koordinaten der Sendequelle auf der Basis dieser Schnittpunkte.

**2.** Verfahren nach Anspruch 1, **dadurch gekennzeichnet, dass** der Schritt des Zusammenführens von Daten, geschätzten Leistungswerten, Ankunftsrichtung DOA, Koordinaten der Antennen, am Prozessor (12) jedes Sensors des Kommunikationsnetzwerks durchgeführt wird.

**3.** Verfahren nach Anspruch 1, **dadurch gekennzeichnet, dass** der Schritt des Zusammenführens von Daten an einer zentralisierten Verarbeitungsvorrichtung durchgeführt wird, die mit den im Kommunikationsnetzwerk vorhandenen Sensoren kommuniziert.

**4.** Verfahren nach Anspruch 1, **dadurch gekennzeichnet, dass** es einen Schritt des Selbstkalibrierens des Antennennetzwerks jedes Sensors anhand der bekannten Position der anderen Sensoren beinhaltet, die dann im Sendemodus benutzt werden.

**5.** Verfahren nach einem der vorherigen Ansprüche, **dadurch gekennzeichnet, dass** es einen Schritt des zeitlichen und frequenzmäßigen Segmentierens (202) des an den Antennen empfangenen Signals und einen Schritt des Erkennens der Anzahl vorhandener Quellen (203) durch Berechnen der Kovarianzmatrix des Signals auf jeden Zeit-Frequenz-Fall und durch Vergleichen der beiden Eigenwerte der Kovarianzmatrix mit dem Rauschpegel beinhaltet.

**6.** Verfahren nach einem der vorherigen Ansprüche, **dadurch gekennzeichnet, dass** als Ausbreitungsmodell zum Bestimmen einer elementaren Lokalisierungszone der Quelle auf der Basis der geschätzten Leistungsquellen ein Ausbreitungsmodell im "freien Raum" benutzt wird.

**7.** Verfahren nach einem der vorherigen Ansprüche, **dadurch gekennzeichnet, dass** die Messperioden an dem von den Sensoren empfangenen Signal das TDMA-Zugriffsverfahren nutzen, und dadurch, dass ein spezifischer TSLT-(Time Slot Look Through)-Schlitz mit einer Dauer in der Größenordnung von 160 Mikrosekunden für eine Unterteilung eines momentanen Empfangsbands in 25 Kilohertz Kanäle zum Ausführen der Schritte des erfindungsgemäßen Verfahrens benutzt wird.

8. System zum Lokalisieren wenigstens einer Sendequelle in einem Kommunikationsnetzwerk, das wenigstens zwei Sensoren $R_1$, $R_2$ umfasst, die über eine Funkverbindung miteinander kommunizieren, wobei jeder Sensor ein Antennennetzwerk umfasst, das wenigstens zwei Empfangsantennen $A_1$, $A_2$ umfasst, wobei ein Sensor einen Prozessor (12) umfasst, ausgelegt wenigstens zum Verarbeiten der empfangenen Signale, um die Leistungswerte des an den Antennen empfangenen Signals, die potentiellen Ankunftsrichtungen und den Phasenverschiebungswert des an den beiden Antennen empfangenen Signals zu bestimmen, wobei das Lokalisierungssystem einen Prozessor umfasst, der zum Ausführen des folgenden Schritts ausgelegt ist:

• Zusammenführen der an den Sensoren empfangenen Leistungswerte, der Werte von potentiellen Ankunftsrichtungen, der Koordinaten der Antennennetzwerke, um die Koordinaten der Sendequelle zu berechnen,

**dadurch gekennzeichnet, dass** das Berechnen der Koordinaten der Sendequelle die folgenden Schritte beinhaltet:

• Definieren, auf der Basis der geschätzten Leistungswerte $\hat{P}_1$, $\widehat{P_2}$ durch die beiden Sensoren $R_1$, $R_2$, eines Ausbreitungsmodells und des Wertes der Beziehung dieser Leistungen $\hat{P}_1$, $\widehat{P_2}$, für jeden Wert der Beziehung einer elementaren Lokalisierungszone $Z_e$, in der sich die Quelle befindet, dann einer potentiellen Lokalisierungszone $Z_s$ entsprechend dem Schnittpunkt der unterschiedlichen elementaren Lokalisierungszonen für eine Sendequelle S,
• Berechnen, auf der Basis der geografischen Koordinaten der Sensoren und der möglichen Ankunftsrichtungen, der möglichen Sichthalbgeraden und ihrer Schnittpunkte P(Dk),
• Konservieren nur der Schnittpunkte P(Dk) der Sichthalbgeraden, die zu der potentiellen Lokalisierungszone $Z_s$ gehören,
• Auswählen der Schnittpunkte P(Dk), für die die geografische Dichte am höchsten ist, und Bestimmen der Koordinaten der Sendequelle auf der Basis dieser Schnittpunkte.

9. Lokalisierungssystem nach Anspruch 8, **dadurch gekennzeichnet, dass** ein Sensor eine Software-Funkstation ist.

## Claims

1. Method for locating at least one electromagnetic source S within a communication network comprising at least two sensors $R_1$, $R_2$, said sensors being separated by a given distance, each sensor comprising a network of antennae comprising at least two reception antennae $A_1$, $A_2$, the method comprising at least the following steps:

• for each sensor $R_1$, $R_2$,
• estimating the powers $P_1$ and $P_2$ of the received signal Sr coming from a source S and received at the sensors $R_1$, $R_2$,
• for the signal Sr arriving at each of the two reception antennae, measuring the phase difference $\Delta\varphi$ on the basis of the value of the phase difference $\Delta\varphi$ and of information on the position and the orientation of the network of antennae $A_1$, $A_2$, determining a set of potential directions of arrival DOA for a given source S, and then
• merging the estimated power values $\hat{P}_1$, $\hat{P}_2$ received at the sensors $R_1$ and $R_2$, the potential direction of arrival DOA values and the geographical coordinates of the networks of antennae of the sensors $R_1$ and $R_2$, in order to calculate the coordinates of the emission source, **characterized in that** the calculation of the coordinates of the emission source comprises the following steps:

• on the basis of the power values $\hat{P}_1$, $\hat{P}_2$ estimated by the two sensors $R_1$, $R_2$, of a propagation model and of the value of the ratio of these powers $\hat{P}_1$, $\hat{P}_2$, defining, for each ratio value, an elementary location area $Z_e$ in which the source is present, and then a potential location area $Z_s$ corresponding to the intersection of the various elementary location areas for an emission source S,
• on the basis of the geographical coordinates of the sensors and of the possible directions of arrival, calculating the possible half-lines of sight and their points of intersection P(Dk),
• retaining only those points of intersection P(Dk) of the half-lines of sight that belong to the potential location area $Z_s$,
• selecting the points of intersection P(Dk) for which the geographical density is highest, and determining the coordinates of the emission source on the basis of these points of intersection.

2. Method according to Claim 1, **characterized in that** the step of merging the data, estimated power values, direction of arrival DOA and coordinates of the antennae is executed in the processor (12) of each sensor of the communication network.

3. Method according to Claim 1, **characterized in that** the step of merging the data is executed in a centralized processing device communicating with the sensors that are present in the communication network.

4. Method according to Claim 1, **characterized in that** it comprises a step of automatically calibrating the network of antennae of each sensor by using the known position of the other sensors while they are being used in emission mode.

5. Method according to one of the preceding claims, **characterized in that** it comprises a step of time segmentation and frequency segmentation (202) of the signal received at the antennae, and a step of detecting the number of sources present (203) by calculating the covariance matrix of the signal at each time/frequency cell and by comparing the two eigenvalues of the covariance matrix with the noise level.

6. Method according to one of the preceding claims, **characterized in that** it uses, as propagation model to determine an elementary location area of the source on the basis of the estimated power values, a 'free space' propagation model.

7. Method according to one of the preceding claims, **characterized in that** the measurement periods on the signal received from the sensors use the TDMA access method, and **in that** a specific Time Slot Look Through, TSLT, with a duration of the order of 160 microseconds for a division of an instantaneous reception band into channels of 25 kilohertz to execute the steps of the method according to the invention.

8. System for locating at least one emission source in a communication network comprising at least two sensors $R_1$, $R_2$ communicating with one another by way of a radio link, each sensor comprising a network of antennae comprising at least two reception antennae $A_1$, $A_2$, a sensor comprising a processor (12) designed at least to process the received signals so as to determine the power values of the signal received at the antennae, the potential directions of arrival and the phase offset value of the signal received at the two antennae, the location system comprising a processor designed to execute the following step:

• merging the power values received at the sensors, the potential direction of arrival values and the coordinates of the network of antennae, in order to calculate the coordinates of the emission source,

**characterized in that** the calculation of the coordinates of the emission source comprises the following steps:

• on the basis of the power values $\hat{P}_1$, $\hat{P}_2$ estimated by the two sensors $R_1$, $R_2$, of a propagation model and of the value of the ratio of these powers $\hat{P}_1$, $\hat{P}_2$, defining, for each ratio value, an elementary location area $Z_e$ in which the source is present, and then a potential location area $Z_s$ corresponding to the intersection of the various elementary location areas for an emission source S,
• on the basis of the geographical coordinates of the sensors and of the possible directions of arrival, calculating the possible half-lines of sight and their points of intersection P(Dk),
• retaining only those points of intersection P(Dk) of the half-lines of sight that belong to the potential location area $Z_s$,
• selecting the points of intersection for which the geographical density is highest, and determining the coordinates of the emission source on the basis of these points.

9. Location system according to Claim 8, **characterized in that** a sensor is a software-defined radio receiver.

FIG.1

FIG.2

300 Coordonnées GPS
Puissances
DOA possibles

301 Récupération des données de chaque capteur

Coordonnées GPS DOA possibles

303 Calcul des Intersections des demi-droites de visées (vraie et ambiguïtés)

Coordonnées GPS Puissances

302 PwDOA Définition de la zone de localisation potentielle

304 Suppression des intersections hors de la zone de localisation

307 Estimation de la localisation de la source

Calcul du barycentre des intersections sur le nuage retenu

305 Détection du nuage de points le plus dense

306

## FIG.3

θ

A₁

d

A₂

## FIG.4

$$C_1 = \frac{\widehat{P_1}}{\widehat{P_2}} - \varepsilon_p$$

Zone de localisation de la source

$$C_2 = \frac{\widehat{P_1}}{\widehat{P_2}} + \varepsilon_p$$

Capteurs $R_1$ et $R_2$

FIG.5

Cercle $\dfrac{\widehat{P_1}}{\widehat{P_2}} - \varepsilon_p$

Capteurs $R_1$ et $R_2$

Cercle $\dfrac{\widehat{P_1}}{\widehat{P_2}} + \varepsilon_p$

Zone de localisation de la source

FIG.6

Intersection des droites de visée

FIG.7

Période trame TDMA

| TS1 | TS2 | TS3 | TS4 | TS5 | TSLT | TS1 | TS2 | TS3 | TS4 | TS5 | TSLT |

Période trame TDMA

| TS1 | TS2 | TS3 | TS4 | TS5 | TSLT | TS1 | TS2 | TS3 | TS4 | TSLT | TS5 |

# FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050073459 A
- US 8248210 B
- US 9316719 B
- WO 9847019 A

**Littérature non-brevet citée dans la description**

- **DON J.TORRIERI.** Statistical Theory of Passive Location Systems. IEEE, 1984